# EUROPEAN PATENT SPECIFICATION

(11) **EP 1 032 056 B1**
(45) Date of publication and mention of the grant of the patent: **20.10.2004**
(21) Application number: 00102863.8
(22) Date of filing: 11.02.2000
(51) Int. Cl.: H01L 41/09

(54) **Ultrasonic driving motor**
Ultraschallmotorantrieb
Moteur d'entraînement à ultrasons

(30) Priority: 26.02.1999 JP 4996999; 26.02.1999 JP 4996399; 06.07.1999 JP 19223699; 06.07.1999 JP 19223399
(43) Date of publication of application: 30.08.2000
(73) Proprietor: HONDA ELECTRONICS CO., LTD., Toyohashi-shi, Aichi-ken (JP); RYOBI LTD., Fuchu-shi, Hiroshima-ken (JP)
(72) Inventor: Yagita, Yasunobu, c/o Honda Electronics Co., Ltd., Toyohashi-shi, Aichi-ken (JP); Kurata, Hisao, c/o Honda Electronics Co., Ltd., Toyohashi-shi, Aichi-ken (JP); Sato, Keichi, c/o Honda Electronics Co., Ltd., Toyohashi-shi, Aichi-ken (JP); Takahashi, Shoji, c/o Ryobi Limited, Fuchu-shi, Hiroshima-ken (JP); Maeda, Yuji, c/o Ryobi Limited, Fuchu-shi, Hiroshima-ken (JP)
(74) Representative: Kirschner, Klaus Dieter, Dipl.-Phys.

(56) References cited:
- EP-A- 0 557 106
- GB-A- 2 183 371
- US-A- 5 093 606
- US-A- 5 107 163
- US-A- 5 440 212
- PATENT ABSTRACTS OF JAPAN vol. 1997, no. 02, 28 February 1997 (1997-02-28) & JP 08 256489 A (SEIKO CORP; SHARP CORP; HONDA ELECTRONIC CO LTD), 1 October 1996 (1996-10-01) -& JP 08 256489 A (SEIKO CORP; SHARP CORP; HONDA ELECTRONIC CO LTD) 1 October 1996 (1996-10-01)
- PATENT ABSTRACTS OF JAPAN vol. 009, no. 039 (E-297), 19 February 1985 (1985-02-19) & JP 59 178987 A (NIPPON KOGAKU KK), 11 October 1984 (1984-10-11) -& JP 59 178987 A (NIPPON KOGAKU KK) 11 October 1984 (1984-10-11)
- PATENT ABSTRACTS OF JAPAN vol. 018, no. 047 (E-1496), 25 January 1994 (1994-01-25) & JP 05 268779 A (MITSUBISHI HEAVY IND LTD), 15 October 1993 (1993-10-15) -& JP 05 268779 A (MITSUBISHI HEAVY IND LTD) 15 October 1993 (1993-10-15)
- PATENT ABSTRACTS OF JAPAN vol. 014, no. 095 (E-0892), 21 February 1990 (1990-02-21) -& JP 01 298967 A (MATSUSHITA ELECTRIC IND CO LTD), 1 December 1989 (1989-12-01)
- PATENT ABSTRACTS OF JAPAN vol. 1999, no. 09, 30 July 1999 (1999-07-30) & JP 11 114494 A (HONDA ELECTRON CO LTD), 27 April 1999 (1999-04-27) -& JP 11 114494 A (HONDA ELECTRON CO LTD) 27 April 1999 (1999-04-27)

## Description

The present invention relates to an ultrasonic driving motor and a control circuit including the ultrasonic driving motor.

In the prior art, ultrasonic driving motor slide projections are made in the inside of a resilient ring frame of a rotor having a separated portion in the resilient ring frame, and the slide projections are pressed on a piezoelectric vibrator by opening the separated portion of the resilient ring frame, and a ring rubber is inserted into a groove of the outside of the resilient ring frame, whereby the slide projections of the rotor are pressed on the piezoelectric vibrator in such an ultrasonic driving motor, however, the rotor cannot be efficiently rotated by elliptically progressive waves generated on the edge of the piezoelectric vibrator, because the projections of the resilient ring frame of the rotor are contacted with the piezoelectric vibrator by leaving the spaces of the projections.

JP 08256489 provides an ultrasonic motor where a slider in pressure contact with an annular piezoelectric ceramic and a shaft or a gear are united. An annular piezoelectric ceramic is fixed to the roughly center of the base of a base member, and many pinchers are made at regular intervals around the disc of the slider such that they project from the disc, and the ceramic pincher of the pincher nips the annular piezoelectric ceramic, and pressure is applied to the pressure material pincher with a pressurizing material such as a rubber band, a ring spring, or the like, and also a gear is fixed integrally to the center of the other side of the disc, and a shaft hole is made at the center of the gear, and a support shaft fixed to the base is inserted into this shaft hole. By doing it this way, the ultrasonic motor fitted with a gear can be constituted simply by constituting the gear of the slider integrally out of a disc, and incorporating it to the base member where the annular piezoelectric ceramic is fixed, and the assembly work becomes simple, and the cost becomes lower.

EP 0557106 discloses an ultrasonic driving motor including a stator, comprising a piezoelectric vibrator having plural electrodes on both sides, the piezoelectric vibrator being fixed in a case, and a rotor comprising a ring frame associated with plural slides which contact an edge face of the piezoelectric vibrator, the slides being in the form of either slide projections extending inwardly from the ring frame or slide members fixed to leaf springs who are themselves fixed to the ring frame.

It is the object of the invention to provide an ultrasonic driving motor an a control circuit for driving the ultrasonic driving motor being efficiently rotated by elliptically progressive waves generated on the edge of the piezoelectric vibrator and being precisely controllable to an optimum frequency or an optimum revolution number of the rotor of the ultrasonic motor.

This object is solved by the ultrasonic driving motor according to claim 1 and the control circuit including the ultrasonic driving motor according to claim 1. The dependent claims, comprising advantages embodiments of the invention.

The invention provides an ultrasonic driving motor for efficiently transmitting progressive wave to a contact member by pressing the whole edge of an ultrasonic vibrator with the contact member consisting of a plural divided parts by a ring-like elastic material. In this ultrasonic driving motor the rotor is rotated by rotating the contact member and the rotor is axially connected to the contact member. The control circuit ensures that the revolutions or the revolution members of the rotor are detected by an encoder, the output of a voltage-to-frequency-converter is converted by the output of the encoder, and the output and the phase of a digital to analogue converter is changed by small amounts by the output of the encoder, whereby optimum frequency to the revolution number of the rotor is regulated.

Embodiments of the invention a now described with reference to the accompanied drawings in which:
Fig. 1 shows a side sectional view of an ultrasonic driving motor of an embodiment of the present invention;
Fig. 2 shows a plane view of an ultrasonic driving motor in Fig. 1;
Fig. 3 shows a plane view of a connection member in Fig. 1;
Fig. 4 shows a side view of a connection member and a contact member;
Fig. 5 shows a side sectional view of an ultrasonic driving motor at another embodiment of the present invention;
Fig. 6 shows a perspective view of a connection member in Fig. 5;
Fig. 7 shows a perspective view of a rotor of an ultrasonic driving motor of the other embodiment of the present invention;
Fig. 8 shows a partial perspective view of an ultrasonic driving motor in the other embodiment of the present invention;
Fig. 9 shows a partial perspective view of a connection member in Fig. 8;
Fig. 10 shows a partial perspective view of a connection member in Fig. 8;
Fig. 11 shows a side sectional view of an ultrasonic driving motor in the other embodiment of the present invention;
Fig. 12 shows a plane view of a connection member and a contact member in Fig. 11;
Fig. 13 shows a side view of a connection member and a contact member in Fig. 11;
Fig. 14 shows a side sectional view of an ultrasonic driving motor in the other embodiment of the present invention;
Fig. 15 shows a plane view of a long member for using an ultrasonic driving motor as shown in Fig. 14;
Fig. 16 shows a side sectional view of an ultrasonic driving motor in the other embodiment of the present invention;
Fig. 17 shows a plane view of a long member for using an ultrasonic driving motor as shown in Fig. 16;
Fig. 18 shows a block diagram of a circuit for controlling an ultrasonic driving motor;
Fig. 19 shows a view for showing a relation of a rotation number and frequency of an ultrasonic motor; and
Fig. 20 shows a circuit view of an ultrasonic driving motor of the present invention.

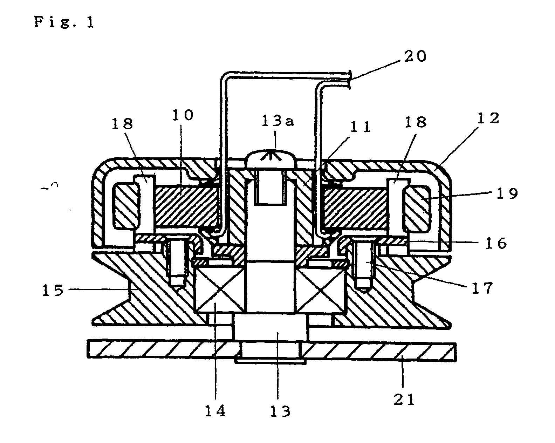

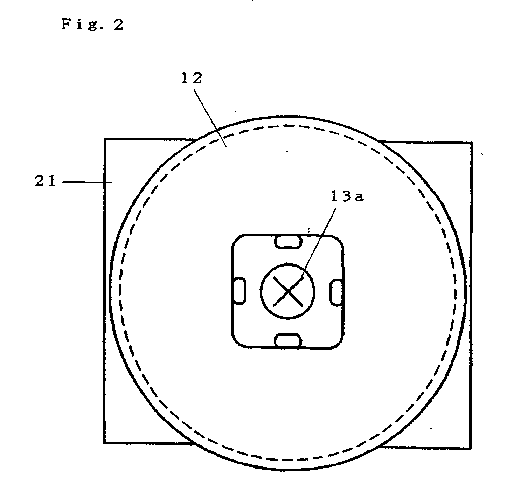

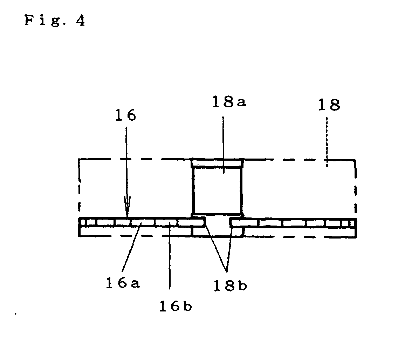

As shown in Figs 1 to 4, a fixing member 11 is fixed a center hole of an ultrasonic vibrator 10, a case 12 and a center axis 13 are fixed by a screw 13a in unity, a bearing 14 is mounted on the center axis 13, a rotor 15 is mounted to rotate the bearing 14, and a connection member 16 is connected to the rotor 15 by a screw 17 in unite.

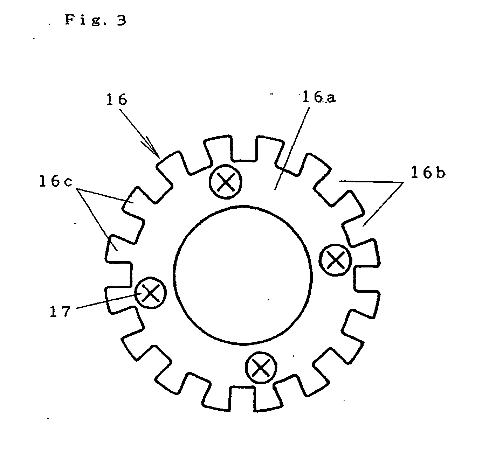

As shown in Fig. 3, the connection member 16 has a plurality of projections 16c formed at an edge of a disk 16a of the connection member 16 and spaces 16b respectively formed between two projections 16c. Cut portions 18b of divided parts 18a are respectively inserted into the spaces 16b. The edges of the projections 16c are inserted into cut portion 18b. The divided parts 18a are mounted on all of the spaces 16b of the connection member 16, whereby a contact member 18 is formed with the divided parts 18a. The contact member 18 is pressed and contacted on the ultrasonic vibrator 10 by mounting a ring-like elastic member 19 outside the contact member 18.

In this ultrasonic driving motor, when an oscillating output is applied to a lead line 20 of the ultrasonic driving motor, since elliptically progressive waves are generated on the edge of the ultrasonic vibrator 10, the contact member 18 contacted under pressure with the edge of the ultrasonic vibrator 10 by the elastic member 19, is rotated. The rotor is rotated through the connection member 16 by rotating the contact member 18. Since this rotor 15 is formed as a pulley, the other rotor can be rotated though a ring-like belt by the rotor 15.

In the present embodiment, the contact member 18 is efficiently rotated by the elliptically progressive waves generated on the edge of the ultrasonic vibrator 10, because the contact member 18 formed of the plurality of divided parts 18a, is contacted under pressure to the edge of the ultrasonic vibrator 10. Also, the ultrasonic driving motor is simply constituted as each part and the external form of the ultrasonic driving motor becomes small, because the contact member 18 and the rotor 15 are connected in the direction of the axis of the ultrasonic vibrator 10.

The case 12 covers the outside of the contact member 18, and a cover 21 is fixed the end portion of the central axis 13, whereby the rotor is not touched hand having the ultrasonic driving motor.

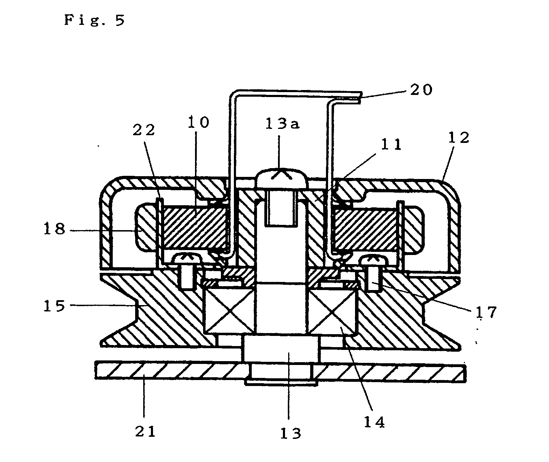

In Fig. 5, an ultrasonic vibrator 10, a fixing member 11, a case 12, a central axis 13, a screw 13a, a bearing 14, a rotor 15, a screw 17 and a ring-like elastic member 19 are shown these elements are the same as those of the above embodiment and the explanation of the these elements is omitted.

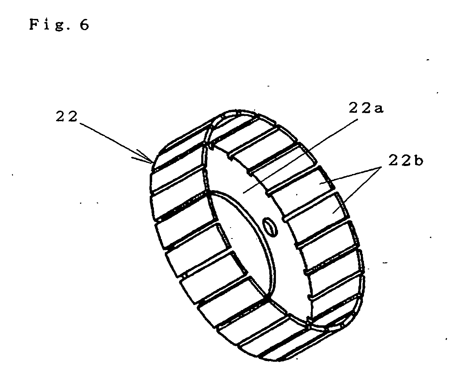

In the present embodiment, as shown in Fig. 6, a contact member 22 consists of a plurality of divided parts 22b vertically fixed to the edge of the disc connection member 22a. The divided parts 22b of the contact member 22 are contacted under pressure with the ultrasonic vibrator 10 by mounting the ring-like elastic member 19 on the outside of the divided parts 22b.

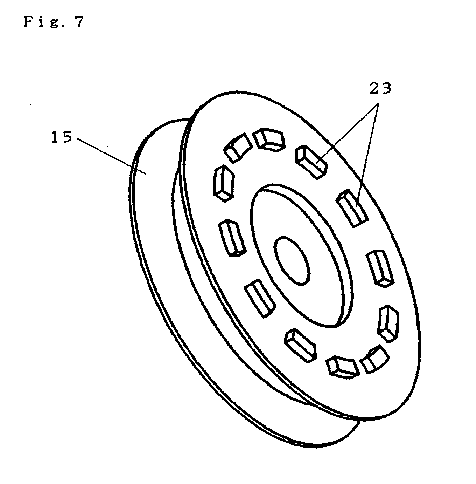

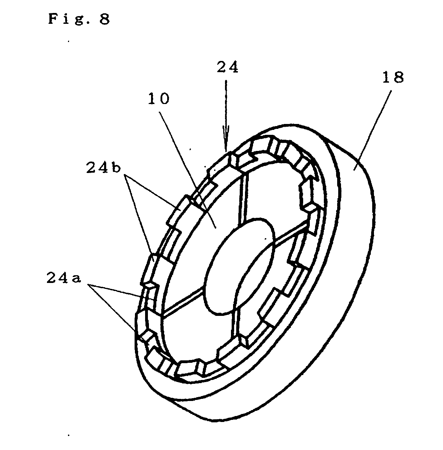

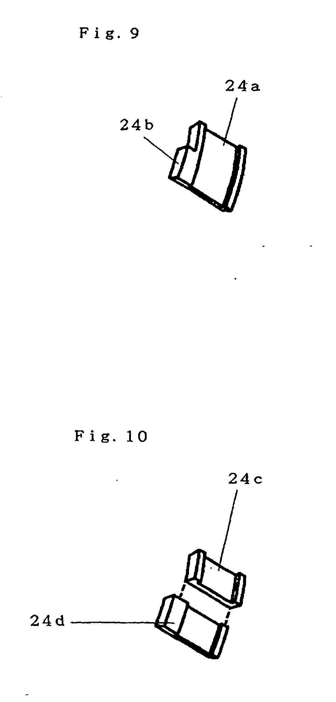

Referring to Figs. 7 and 8, a connection member 23 consists of plurality of projections formed at the side of the rotor 15. A contact member 24 consists of plurality of divided parts 24a having a plurality of projections 24b in the end of the divided parts 24a as shown in Fig. 9. The divided parts 24a are contacted under pressure to the ultrasonic vibrator 10 by the ring-like elastic member 19 and the projections 24b are respectively inserted between the connection members 23 and are connected to the connection member 23.

In this embodiment, since the connection members 23 are protecting from the side of the rotor 15, screws for fixing the connection member 23 to the rotor 15 are omitted.

Though the projections 24b are formed at one ends of the divided parts 24a, the divided part 24a is divided in two parts as shown in Fig. 10, whereby divided parts 24c and 24d are formed. The divided part 24c is longer than divided part 24d, and the projection is formed the divided part 24d.

In this ultrasonic driving motor, since the contact member consisting of a plurality of divided parts is contacted under pressure with the ultrasonic vibrator by the ring-like elastic member, the contact member can be efficiently rotated by the elliptically progrssive waves the ultrasonic driving motor becomes small, because the contact member and the rotor are connected in the direction of the axis of the ultrasonic vibrator 10.

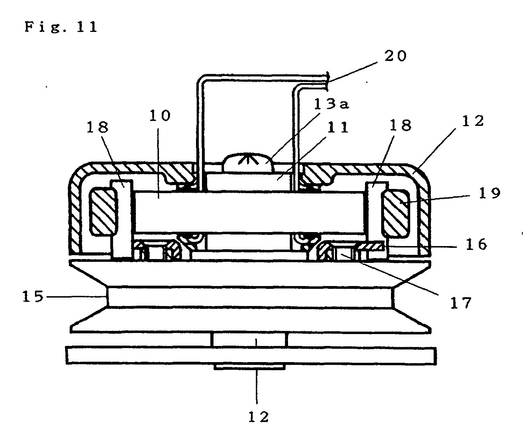

In Fig. 11, an ultrasonic vibrator 10, a fixing member 11, a case 12, a central axis 13, a screw 13a, a rotor 15, a connection member 16, a screw 17, a contact member 18, a ring-like elastic member 19 and a lead line 20 are shown. These elements are the same as those of the above embodiment and the explanation of these elements is omitted.

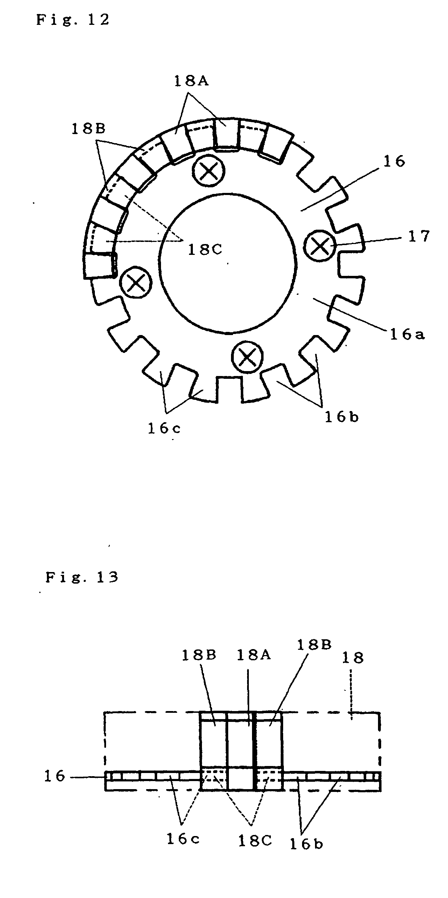

As shown in Figs. 12 and 13, the contact member 18 consists of divided parts 18A of square rods inserted into the spaces 16b of the connection member 16, and divided parts 18B respectively having the same form of the divided part 18A and cut portion 18C for inserting the projection 16c of the connection member 16. The contact member 18 is composed by alternately mounting the divided parts 18A and 18B. Then, the elastic member 19 is mounted on the outer portion of the divided parts 18A and 18B which are in contact under pressure to the edge of the ultrasonic vibrator 10.

In this embodiment, since the divided parts 18A and 18B are formed in the same form, and the cut portion 18C is formed near the end of the divided part 18B, the composition of the contact member 18 becomes very simple.

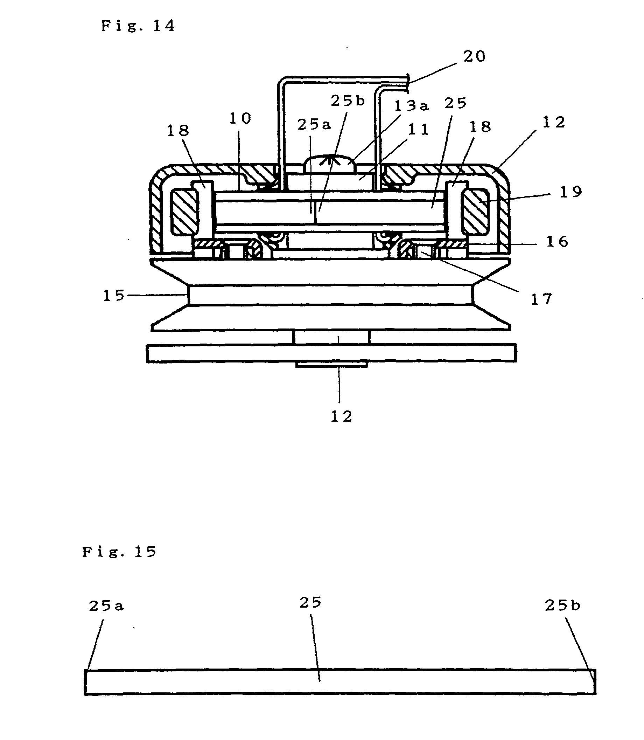

In Fig. 14, an ultrasonic vibrator 10, a fixing member 11, a case 12, a central axis 13, a screw 13a, a rotor 15, a connection member 16, a screw 17, a contact member 18, a ring-like elastic member 19 and a lead line 20 are shown. These elements are the same as those of the above embodiment and the explanation of the those constitutions is omitted.

In the present embodiment, a thin long sheet 25 shown in Fig. 15 is inserted between the contact member 18 and the ultrasonic vibrator 10. Also, both ends 25a and 25b of the long sheet 15 are rectangularly formed.

In this ultrasonic driving motor, when oscillating output is applied to the lead lines 20 connected to the electrodes of the ultrasonic vibrator 10, since the elliptically progressive waves is generated on the edge of the ultrasonic vibrator 10, the contact member 18 which is contacted under pressure with the edge of the ultrasonic vibrator 10 by the elastic member 19, is rotated by the elliptically progressive waves and the rotor 15 is rotated with the contact member 18. Then, though noise generates from ultrasonic driving motor, the rotation of the ultrasonic driving motor becomes smooth the noise is eliminated from the ultrasonic driving motor by the long thin sheet 25 inserted between the contact member 18 and ultrasonic vibrator 10, and the contact member 18 is prevented from abrasion.

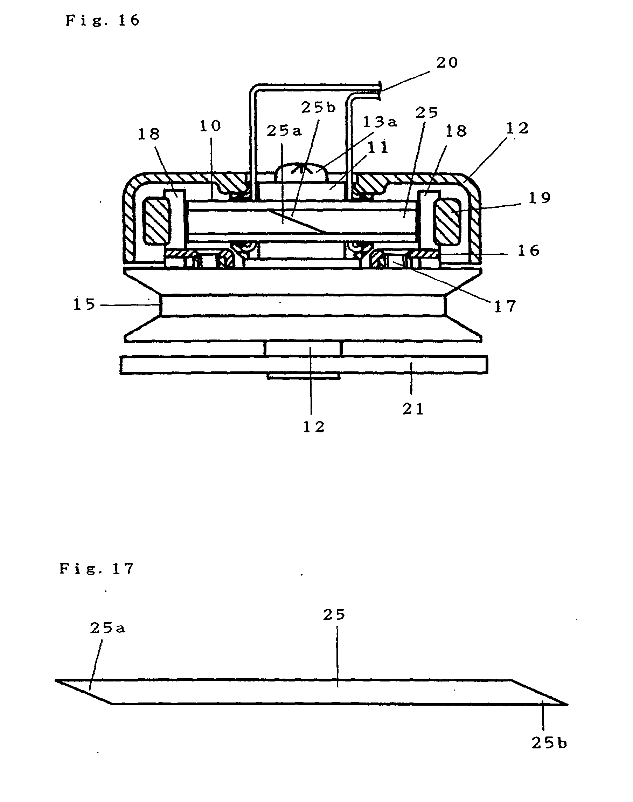

In Fig. 16, an ultrasonic vibrator 10, a fixing member 11, a case 12, a central axis 13, a screw 13a, a rotor 15, a connection member 16, a screw 17, a contact member 18, a ring-like elastic member 19 and a lead line 20 are shown. These elements are the same as those of the above embodiment and the explanation of the those constitutions is omitted.

In the present embodiment, a thin long sheet 25 as shown in Fig. 17 has both oblique ends and is inserted between the contact member 18 and the ultrasonic vibrator 10. When the thin long sheet 25 is caught by the contact member 18 and is twisted by the rotation of the contact member, the two oblique ends of the thin long sheet 25 are prevented from catching in the contact member 18.

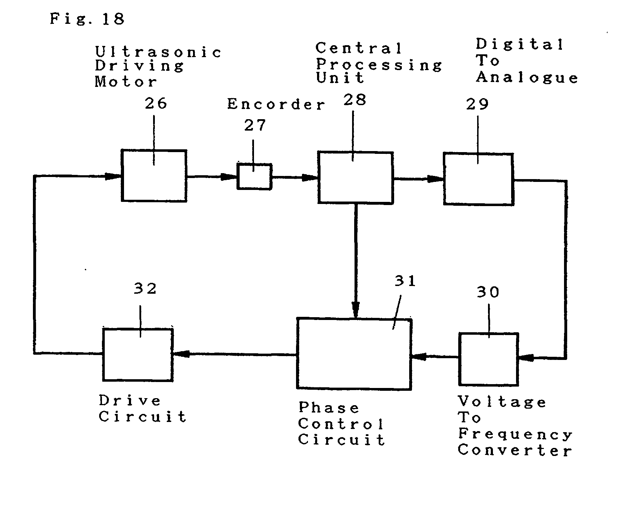

Fig. 18 shows a block diagram of a circuit for controlling an ultrasonic driving motor, an encoder 27 for detecting revolution number is connected to an ultrasonic driving motor 26, output of the encoder 27 is applied to a central processing unit 28, output of the central processing unit 28 is applied a digital-to-analogue-converter 29, clock signals from the central processing unit 28 are converted voltage signals and are applied to a voltage-to-frequency-converter 30, and voltage signals are converted frequency.

Then, the frequency signals of output from the voltage-to-frequency-converter 30 are applied to a phase control circuit 31, the phase of the frequency signals from the voltage-to-frequency-converter 30 is changed by the signals of the central processing unit 28 and is applied to a drive circuit 32 and the ultrasonic driving motor 26 is driven by the output from the drive circuit 32.

In the control circuit for controlling the ultrasonic driving motor in the present embodiment, the central processing unit 28 controls the output of the voltage-to-frequency-converter 30 to become higher frequency than the optimum frequency by the output of the digital-to-analogue-converter 29, and the central processing unit 28 changes the output of the digital-to-analogue-converter 29 to make the frequency from the voltage-to-frequency-converter 30 low while the revolution number of the ultrasonic driving motor 26 is checked by the encoder 27.

Then, when the output of the voltage-to-frequency-converter 20 becomes about optimum frequency (revolution number), the central processing unit 28 changes in small value the output of the digital-to-analogue-converter 29 and controls small frequency which cannot be regulated by the resolving power of the voltage-to-frequency-converter 29.

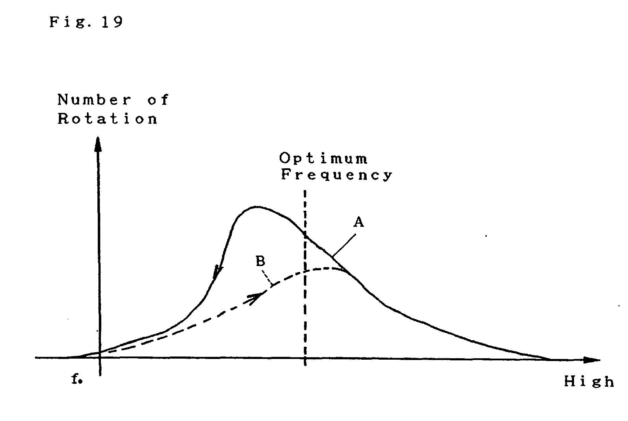

In this embodiment, as shown in Fig. 19, when the revolution number of the ultrasonic driving motor 26 is changed from high frequency to low frequency and from low frequency to high frequency, though the change of the torque of the ultrasonic driving motor 26 is different from revolution number thereof and the revolution number of the ultrasonic driving motor 26 is changed by the difference of torque and load, such change is detected by detecting the revolution number of the ultrasonic driving motor 26 by the encoder 27, the revolution number of the ultrasonic driving motor 26 is regulated to the optimum value by changing the output of the digital-to-analogue-converter 29 in the small value in the central processing unit 28. The output of the digital-to-analogue-converter 29 may set a predetermined charge to discharge time by a condenser.

As explained above, in the controlling circuit of the ultrasonic driving motor, though the resolving power of the digital-to-analogue-converter is low and small optimum frequency cannot be fixed, the revolution number of the ultrasonic driving motor is detected by the encoder, the output of the digital-to-analogue-converter is changed by a small value, whereby the ultrasonic driving motor is rotated in optimum frequency.

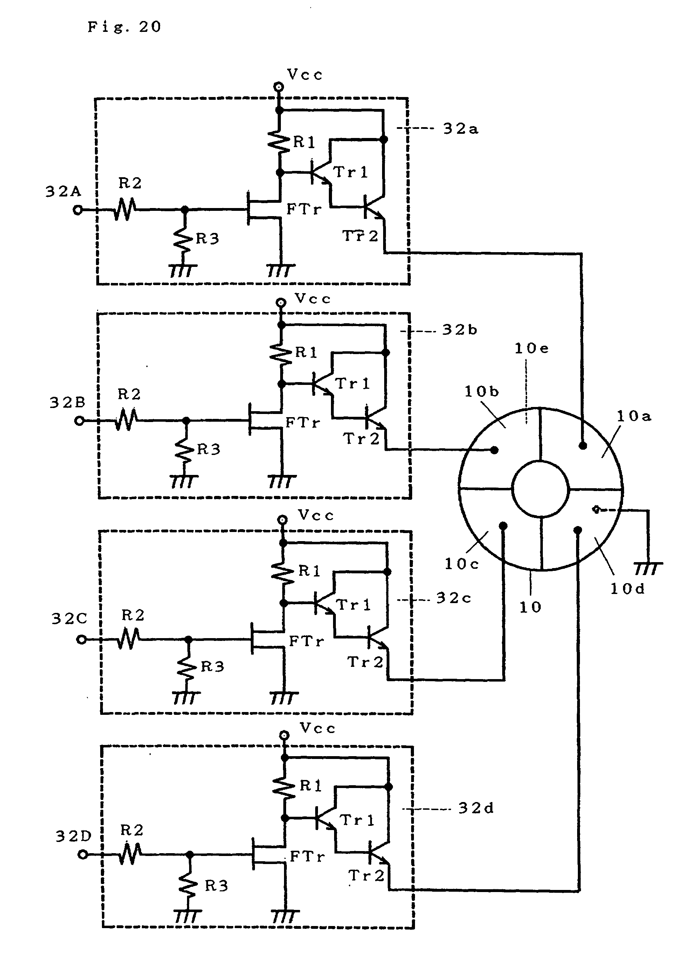

Fig. 20 shows a circuit view of an ultrasonic driving motor in the present invention, in drive circuits 32a, 32b, 32c and 32d, the drain of a field-effect transistor FTr is connected through a first resister R1 to a direct current source Vcc, the collectors of a first transistor Tr1 and a second transistor Tr2 are connected to the direct current source Vcc, the emitter of the first transistor Tr1 is connected to the base of the second transistor Tr2, the gate of the field-effect transistor FTr is connected through a second resistor R2 to signal input terminals 32A, 32B, 32C and 32D, the gate of the field-effect transistor FTr is connected through a third resistor R3 to ground, and the source of the field-effect transistor FTr is connected ground.

In the ultrasonic vibrator 10 of the ultrasonic driving motor 26, a electrode on one side is divided into four in the same width from center, the four electrode parts 10a, 10b 10c and 10d are respectively connected to emitters of the second transistors Tr2 of the drive circuits 32a, 32b, 32c and 32d, and the whole electrode 10e on the other side of the ultrasonic vibrator 10 is connected to ground and predetermined frequency signals phases of which are shifted in 90 degrees each other, are applied to the four drive circuits.

In the ultrasonic driving motor of the present embodiment, when off signals are applied to the signal input terminals 32A-32D of the drive circuits 32a-32d in turn, the field-effect transistor FTr becomes off, the first and second transistors Tr1 and Tr2 becomes on, the direct current voltage of the direct current source Vcc is applied from the drive circuits 32a-32d to the four divided electrodes 10a-10d, whereby progressive wave is generated on the ultrasonic vibrator 10 and the contacting member 18 can be rotated by contacting under pressure with the edge of the ultrasonic vibrator 10.

In the present embodiment, the electrode on the one side of the ultrasonic vibrator 10 is divided into four electrode parts, the direct current voltage is applied to the four divided electrode parts 10a, 10b, 10c and 10d in turn from the drive circuit 32a-32d, whereby the progressive waves are generated on the edge of the ultrasonic vibrator 10, the composition of the ultrasonic vibrator 10 becomes simple, and heat generating in the ultrasonic vibrator 10 is discharged from the whole electrode 10e.

In the above embodiment, though the whole electrode 10e is connected to ground, the whole electrode 10e is connected to ground, the whole electrode may be directly connected to the direct current source. An excellent metal for discharging heat, eg aluminum, is mounted as a whole electrode. Since the four divided electrodes are mounted on the one side of the ultrasonic vibrator, the whole electrode is mounted on the other side of the ultrasonic vibrator, the circuit composition of the present embodiment becomes simple. Because an excellent metal for discharge heat is used for the whole electrode, the heat generated in the ultrasonic vibrator can be discharged.

## Claims

1. Ultrasonic driving motor comprising
- an ultrasonic vibrator (10) having a center hole and an edge generating elliptically progressive waves,
- a contact member (18) formed by a plurality of divided parts (18 a),
- a ring-like elastic member (19) for pressing the contact member (18) to the edge of the ultrasonic vibrator (10),
- a fixing member (11) fixed to the center hole of the ultrasonic vibrator (10),
- a rotor (15) mounted to the fixing member (11) rotating around a center axis (13) mounted in a bearing (14)
- a connection member (16) for connecting the contact member (18) to the rotor (15)
**characterized in that**,
projections or spaces provided at the side of the contact member (18) are connected to spaces (16b) and projections (16c) provided with the end of connection member (16).

2. Motor of claim 1, wherein one set of divided parts (18 a) of the contact member (18) is inserted into spaces (16b) of the connection member (16) and projections (16c) of the connection member (16) are inserted into cut portions formed near one ends of the other set of divided parts (18 a) of the contact member (18).

3. Motor of any of the claims 1 to 2, wherein a long thin sheet (25) is inserted between the ultrasonic vibrator (10) and the contact member (18).

4. Control circuit including the ultrasonic driving motor according to claim 1 comprising
- an encoder (27) for detecting revolution number of the ultrasonic driving motor (26),
- a central processing unit (28) for receiving an output of the encoder (27),
- a digital-to-analogue-converter (29) for converting digital signals from the central processing unit (28) to an analogue voltage,
- a voltage-to-frequency-converter (30) for converting the analogue voltage to frequency signals,
- a phase control circuit (31) for regulating the phase of the frequency signals by the output of the central processing unit (28),
- a drive circuit (32a, 32b, 32c, 32d) driving the ultrasonic driving motor (26) by phase controlled signals from the phase control circuit (31).

5. Control circuit of claim 4, wherein, the drive circuit (32a, 32b, 32c, 32d) comprises
a field effect transistor (FTr),
a first transistor (Tr1),
a second transistor (Tr2),
a first resistor (R1),
a second resistor (R2),
a third resistor (R3), and
signal terminals (32A, 32B, 32C, 32D), wherein
the drain of the field effect transistor (FTr), is connected through the first resistor (R1) to a direct current source (Vcc) and is connected to the base of the first transistor (Tr1),
the collectors of the first (Tr1) and the second (Tr2) transistors are connected to the direct current source (Vcc),
the emitter of the first transistor (Tr1) is connected to the base of the second transistor (Tr2),
the source of the field effect transistor (FTr) is connected to ground,
the gate of the field effect transistor (FTr) is connected through the second resistor (R2) to the signal terminals (32A, 32B, 32C, 32D) and through the third resistor (R3) to ground.

6. Control circuit of claim 4, wherein
an electrode mounted on one side of the ultrasonic vibrator (10) of the ultrasonic driving motor (26) is divided into four electrode parts (10a, 10b, 10c, 10d) and
a whole electrode (10e)is mounted on the other side of the ultrasonic vibrator (10).

7. Control circuit of claim 6, wherein the four divided electrode parts (10a, 10b, 10c, 10d) are connected to the emitters of the second transistors (Tr2) of the four drive circuits (32a, 32b, 32c, 32d).

8. Control circuit of claim 6, wherein the whole electrode (10e) on the other side of the ultrasonic vibrator (10) is connected to ground.

9. Control circuit of claim 6, wherein the whole electrode (10e) mounted on the other side of the ultrasonic vibrator (10) is connected to the direct current source (Vcc).

10. Control circuit of claim 6, wherein the whole electrode (10e) mounted on the other side of the ultrasonic vibrator (10) is composed by metal having excellent discharge effect.

11. Control circuit of claim 10, wherein the metal having excellent discharge effect is aluminum

## Patentansprüche

1. Ultraschallmotorantrieb, umfassend
- einen Ultraschallvibrator (10) mit einem Zentrumsloch und einem Rand, der elliptische progressive Wellen erzeugt,
- ein Kontaktelement (18), das aus einer Vielzahl von aufgeteilten Teilen (18a) gebildet wird,
- ein ringähnliches elastisches Element (19), um das Kontaktelement (18) an den Rand des Ultraschallvibrators (10) zu pressen,
- ein Befestigungselement (11), das an dem Zentrumsloch des Ultraschallvibrators (10) befestigt ist,
- einen Rotor (15), der an dem Befestigungselement (11) befestigt ist, der sich um eine Mittelachse (13) dreht, die in einem Lager (14) montiert ist,
- ein Verbindungselement (16), um das Kontaktelement (18) mit dem Rotor (15) zu verbinden,
**gekennzeichnet durch**
Vorsprünge oder Lücken, die an der Seite des Kontaktelementes (18) vorhanden sind, die mit den Lücken (16b) und Vorsprüngen (16c) verbunden sind, wobei die Vorsprünge (16c) am Ende des Verbindungselementes (16) vorhanden sind.

2. Motor nach Anspruch 1, worin ein Satz von aufgeteilten Teilen (18a) des Kontaktelementes (18) in die Lücken (16b) des Verbindungselementes (16) eingesetzt wird und worin Vorsprünge (16c) des Verbindungselementes (16) in ausgeschnittene Abschnitte eingesetzt werden, die in der Nähe eines Endes des anderen Satzes von aufgeteilten Teilen (18a) des Kontaktelementes (18) ausgebildet sind.

3. Motor nach den Ansprüchen 1 bis 2, worin ein langer, dünner Streifen (25) zwischen den Ultraschallvibrator (10) und das Kontaktelement (18) eingesetzt wird.

4. Steuerschaltung, welche den Ultraschallmotorantrieb nach Anspruch 1 enthält, umfassend
- einen Kodierer (27) zum Detektieren der Drehzahl des Ultraschallmotorantriebs (26),
- eine zentrale Verarbeitungseinheit (28) zum Empfangen eines Ausgangssignals des Kodierers (27),
- einen Digital/Analog-Wandler (29) zum Umwandeln der digitalen Signale von der zentralen Verarbeitungseinheit (28) in eine analoge Spannung,
- einen Spannungsfrequenzwandler (30) zum Wandeln der analogen Spannung in Frequenzsignale,
- eine Phasenregelschaltung (31) zum Regeln der Phase der Frequenzsignale mittels dem Ausgangssignal der zentralen Verarbeitungseinheit (28),
- eine Treiberschaltung (32a, 32b, 32c, 32d) zum Antreiben des Ultraschallmotorantriebs (26) durch phasengeregelte Signale von der Phasensteuerschaltung (31).

5. Steuerschaltung nach Anspruch 4, worin die Treiberschaltung (32a, 32b, 32c, 32d) umfasst
einen Feldeffekttransistor (FTr),
einen ersten Transistor (Tr1),
einen zweiten Transistor (Tr2),
einen ersten Widerstand (R1),
einen zweiten Widerstand (R2),
einen dritten Widerstand (R3), und
Signalkontakte (32A, 32B, 32C, 32D), worin
das Drain des Feldeffekttransistors (FTr) über den ersten Widerstand (R1) mit einer Gleichstromquelle (Vcc) und mit der Basis des ersten Transistors (Tr1) verbunden ist,
die Kollektoren des ersten (Tr1) und des zweiten (Tr2) Transistors mit der Gleichstromquelle (Vcc) verbunden sind,
der Emitter des ersten Transistors (Tr1) mit der Basis des zweiten Transistors (Tr2) verbunden ist,
die Source des Feldeffekttransistors (FTr) mit Masse verbunden ist,
das Gate des Feldeffekttransistors (FTr) über den zweiten Widerstand (R2) mit den Signalkontakten (32A, 32B, 32C, 32D) und über den dritten Widerstand (R3) mit Masse verbunden ist.

6. Steuerschaltung nach Anspruch 4, worin
eine Elektrode, die auf einer Seite des Ultraschallvibrators (10) des Ultraschallmotorantriebes (26) montiert ist, in vier Elektrodenteile (10a, 10b, 10c, 10d) aufgeteilt ist, und
eine ganze Elektrode (10e) auf der anderen Seite des Ultraschallvibrators (10) montiert ist.

7. Steuerschaltung nach Anspruch 6, worin die vier aufgeteilten Elektrodenteile (10a, 10b, 10b, 10c, 10d) mit den Emittern der zweiten Transistoren (Tr2) der vier Antriebsschaltungen (32a, 32b, 32c, 32d) verbunden sind.

8. Steuerschaltung nach Anspruch 6, worin die ganze Elektrode (10e) auf der anderen Seite des Ultraschallvibrators (10) mit Masse verbunden ist.

9. Steuerschaltung nach Anspruch 6, worin die ganze Elektrode (10e), die auf der anderen Seite des Ultraschallvibrators (10) montiert ist, mit der Gleichstromquelle (Vcc) verbunden ist.

10. Steuerschaltung nach Anspruch 6, worin die Gesamtelektrode (10e), die auf der anderen Seite des Ultraschallvibrators (10) befestigt ist, aus Metall hergestellt ist, das einen hervorragenden Entladeeffekt hat.

11. Steuerschaltung nach Anspruch 10, worin das Metall mit dem exzellenten Entladeeffekt Aluminium ist.

## Revendications

1. Moteur d'actionnement ultra-sonique comprenant
- un vibrateur ultra-sonique (10) ayant un trou central et un bord générant elliptiquement des ondes progressives,
- une pièce de contact (18) formée par une pluralité de parts divisées (18a),
- une pièce élastique annulaire (19) pour le pressage de la pièce de contact (18) du bord du vibrateur ultra-sonique (10),
- une pièce de fixation (11) fixée dans un trou de centrage du vibrateur ultra-sonique (10),
- un rotor (15) monté sur la pièce de fixation (11) qui tourne autour un axe de centrage (13) monté dans un palier intermédiaire (14),
- une pièce de connexion (16) pour la connexion de la pièce de contact (18) au rotor (15), **caractérisé en ce que**, les proéminences ou les espaces prévus au côté latérale de la pièce de contact (18) sont connectés aux espaces (16b) et aux proéminences (16c) prévues à l'extrémité de la pièce de connexion (16).

2. Moteur selon la revendication 1, où un set des parts divisées (18a) de la pièce de contact (18) est inséré dans les espaces (16b) de la pièce de connexion (16) et les proéminences (16c) de la pièce de connexion (16) sont insérées dans les portions coupées formées près d'une des extrémités de l'autre set de parts divisées (18a) de la pièce de contact (18).

3. Moteur selon l'une quelconque des revendications 1 à 2, où une tôle mince (25) est insérée entre le vibrateur ultra-sonique (10) et la pièce de contact (18).

4. Circuit de commande incluant le moteur d'actionnement ultra-sonique selon la revendication 1, comprenant
- un codeur (27) pour la détection du nombre de rotations du moteur d'actionnement ultra-sonique (26),
- une unité centrale de traitement (28) pour la réception d'une sortie du codeur (27),
- un traducteur digital-analogique (29) pour la conversion des signaux digitaux de l'unité centrale de traitement (28) dans une tension analogique,
- un convertisseur tension-fréquence (30) pour la conversion de la tension analogique en signaux à fréquence,
- un circuit de contrôle de la phase (31 ) pour le réglage de la phase des signaux à fréquence par la sortie de l'unité centrale de traitement (28),
- un circuit de commande (32a, 32b, 32c, 32d) commandant le moteur d'actionnement ultra-sonique (26) par des signaux contrôlés par phase du circuit de contrôle de la phase (31).

5. Circuit de contrôle selon la revendication (4), où, le circuit de commande (32a, 32b, 32c, 32d) comprend
- un transistor à effet de champ (FTr),
- un premier transistor (Tr1),
- un second transistor (Tr2),
- une première résistance (R1),
- une seconde résistance (R2),
- une troisième résistance (R3), et
- les bornes de signal (32A, 32B, 32C, 32D), où
- le drain du transistor à effet de champ (FTr) est connecté par la première résistance (R1) à une source de courant continu (Vcc) et est connecté à la base du premier transistor (Tr1),
- les commutateurs du premier (Tr1) et du second (Tr2) transistor sont connectés à une source de courant continu (Vcc),
- l'émetteur du premier transistor (Tr1) est connecté à la base du second transistor (Tr2),
- la source du transistor à effet de champ (FTr) est connectée au sol,
- le circuit de porte du transistor à effet de champ (FTr) est connecté par la seconde résistance (R2) aux bornes de signal (32A, 32B, 32C, 32D) et par la troisième résistance (R3) au sol.

6. Circuit de contrôle selon la revendication 4, où
- une électrode montée sur un côté du vibrateur ultra-sonique (10) du moteur d'actionnement ultra-sonique (26) est divisé en quatre parts d'électrode (10a, 10b, 10c, 10d) et
- une électrode complète (10e) est montée sur l'autre côté du vibrateur ultrasonique (10).

7. Circuit de contrôle selon la revendication 6, où les quatre parts d'électrode divisée (10a, 10b, 10c, 10d) sont connectées aux émetteurs des seconds transistors (Tr2) des quatre circuits de commande (32a, 32b, 32c, 32d).

8. Circuit de contrôle selon la revendication 6, où l'électrode complète (10e) de l'autre côté du vibrateur ultrasonique (10) est connectée au sol.

9. Circuit de contrôle selon la revendication 6, où l'électrode complète (10e) montée sur l'autre côté du vibrateur ultrasonique (10) est connectée à la source de courant continu (Vcc).

10. Circuit de contrôle selon la revendication 6, où l'électrode complète (10e) montée sur l'autre côté du vibrateur ultrasonique (10) est composée du métal ayant un excellent effet de décharge.

11. Circuit de contrôle selon la revendication 10, où le métal ayant un excellent effet de décharge est aluminium.
